# FASCICULE DE BREVET EUROPEEN

(11) **EP 2 414 448 B1**
(45) Date de publication et mention de la délivrance du brevet: **17.07.2013**
(21) Numéro de dépôt: 10711404.3
(22) Date de dépôt: 30.03.2010
(51) Int. Cl.: C09J 7/02

(54) **UTILISATION DE DINITRILE ARYLE OXYDES DANS UNE COMPOSITION ADHESIVE**
VERWENDUNG VON ARYLDINTRILOXIDEN IN KLEBSTOFFZUSAMMENSETZUNGEN
USE OF ARYL DINITRILE OXIDES IN ADHESIVE COMPOSITION

(30) Priorité: 31.03.2009 FR 0952051
(43) Date de publication de la demande: 08.02.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ARAUJO DA SILVA, José Carlos, F-63430 Pont Du Chateau (FR); HUNAULT, Vincent, F-63430 Les Martres D'artieres (FR); ROBERT, Pierre, F-63000 Clermont-ferrand (FR); VEYLAND, Anne, F-63200 Marsat (FR)
(74) Mandataire: Sidhu, Alban
(86) Numéro de dépôt international: PCT/EP2010/054172
(87) Numéro de publication internationale: WO 2010/112492

(56) Documents cités:
- WO-A-2006/081415
- FR-A- 2 529 633
- US-B1- 6 355 826

## Description

L'invention concerne l'utilisation d'une composition adhésive entre une pièce de caoutchouc vulcanisée et une pièce de caoutchouc crue ou prévulcanisée ou vulcanisée destinée à servir comme gomme de liaison de deux pièces de caoutchouc crues ou prévulcanisées ou vulcanisées pour le rechapage de pneumatiques usagés ou la fabrication d'emplâtres destinés à la réparation de pneumatiques.

Il existe différents procédés connus de rechapage et de réparation de pneumatiques notamment pour poids-lourds, avion, génie civil, le rechapage dit « à chaud » qui consiste à cuire dans un moule sous pression l'enveloppe de pneumatique rechapée et /ou réparée à l'aide d'emplâtres ou de gommes de réparation, notamment sous forme de chevilles, à une température de 150°C, le rechapage et/ou la réparation dit « à froid » qui consiste à opérer une vulcanisation de la bande de roulement et/ou d'une nappe de protection et/ou d'une carcasse et d'une gomme de réparation à une température relativement basse, de l'ordre de 95°C à 115°C, le rechapage et/ou la réparation dit « à basse température » qui consiste à opérer à une température de l'ordre de 60°C à 20°C à l'aide d'accélérateurs de vulcanisation censés fonctionner à une telle basse température.

Tout comme pour les procédés dits « à chaud » et « à froid », le procédé de rechapage ou de réparation « à basse température » requiert une bonne adhésion de la gomme de liaison aux mélanges caoutchouteux adjacents. Pour ces gommes de liaison, il est donc nécessaire d'utiliser des systèmes de vulcanisation très réactifs à température ambiante de façon à garantir des vitesses de cuisson rapides et des degrés de réticulation élevés. Ces deux performances du système de "cuisson" sont indispensables pour obtenir à température ambiante, de l'ordre de 20°C à 30°C, le niveau de réticulation requis pour ce type d'application dans un délai raisonnable, c'est-à-dire au plus 24 heures. En effet, il existe un réel besoin sur le marché du rechapage et de la réparation de pneumatiques, d'un procédé de rechapage et/ou de réparation au moyen d'emplâtres opérationnel à température ambiante dans un délai d'au plus 24 heures.

Les emplâtres de réparation de pneumatiques, notamment de pneumatiques poids-lourds usagés à carcasse radiale, comprennent un assemblage de différentes couches de caoutchoucs, comportant ou non des éléments de renforcements sous forme de câbles généralement en textiles synthétiques et une fine couche d'une composition de caoutchouc adhésive destinée à être appliquée sur la gomme intérieure de l'enveloppe de pneumatique à l'emplacement de l'enveloppe à réparer.

Les travaux conduits par les inventeurs ont permis de conclure que les accélérateurs de vulcanisation classiquement censés fonctionner à basse température ne permettaient pas d'obtenir un niveau de réticulation satisfaisant pour l'utilisation à titre de gomme de liaison de deux pièces de caoutchouc crues ou prévulcanisées ou vulcanisées destinée au rechapage ou à la réparation de pneumatiques en deçà de 45°C. Pour résoudre le problème posé, les inventeurs se sont alors tournés vers un autre concept, à savoir induire une réticulation via un composé à doubles fonctions très réactives avec le caoutchouc naturel (NR) dès la température ambiante et ont sélectionné parmi de tels composés l'utilisation de composés aryle dinitrile oxydes et plus particulièrement parmi ceux-ci le mésitylène dinitrile oxyde (MDNO).

Le brevet FR 1.583.406 divulgue la création de dinitrile oxydes polyfonctionnels in situ dans des matrices polymériques pour permettre la réticulation des polymères constitutifs de telles matrices, parmi lesquels entre autres les polybutadiènes, le caoutchouc naturel, les copolymères butadiène-styrène, le caoutchouc butyle, dans une fourchette de température allant de 0°C à 100°C tout en recommandant d'utiliser à température ambiante, la réticulation nécessitant alors plusieurs jours. Cette création in situ est justifiée par la grande instabilité des dinitrile oxydes polyfonctionnels.

La demande de brevet EP 0.903.338A2 décrit une méthode de synthèse de composés aryle dinitrile oxydes stables, dont le MDNO, et indique que ces composés sont utilisables comme agents de "cuisson" ou de "vulcanisation" de latex de polymères oléfiniques saturés à température ambiante.

Le brevet US 6.252.009B1 divulgue l'utilisation de dinitrile oxydes stables, dont le MDNO, pour la vulcanisation de polymères acryliques.

Ainsi dans l'art antérieur il n'existe pas de système de "cuisson" capable dans des compositions d'élastomères diéniques, c'est-à-dire fortement insaturés, pour gommes de liaison servant au rechapage ou emplâtres servant à la réparation de pneumatiques, de conférer à la fois une cuisson à température ambiante comprise entre 20°C et 30°C dans un délai court d'au maximum 24 heures et un rendement de réticulation élevé après cuisson à température ambiante.

L'objet de l'invention concerne l'utilisation d'une composition adhésive entre une pièce de caoutchouc vulcanisée et une pièce de caoutchouc crue ou prévulcanisée ou vulcanisée, à base d'au moins un élastomère fortement insaturé choisi dans le groupe constitué par le caoutchouc naturel, le polyisoprène, le polybutadiène, les copolymères styrène-butadiène, styrène-isoprène, butadiène-isoprène et les terpolymères styrène-butadiène-isoprène, un solvant aliphatique et un système de "cuisson" comprenant au moins un composé aryle dinitrile oxyde stable.

A titre de composés aryle dinitrile oxydes stables, conviennent notamment les composés décrits dans la demande de brevet EP 0.903.338A2.

Selon une forme d'exécution préférentielle, le composé aryle dinitrile oxyde stable est le mésitylène dinitrile oxyde, MDNO, et le bismésitylène dinitrile oxyde, BMNO.

Avantageusement, le taux de composé aryle dinitrile oxyde stable est compris entre 1 à 20 pce, parties en poids pour cent parties d'élastomère, de préférence entre 2 et 15 pce et encore plus préférentiellement entre 5 et 10 pce.

Selon un mode de réalisation de l'invention, la température d'utilisation est inférieure à 60°C, de préférence la température d'utilisation est comprise entre 18°C et 45°C.

Selon une caractéristique de l'invention,la pièce de caoutchouc vulcanisée est constituée par une partie d'un pneumatique, en particulier elle est constituée par la carcasse, la bande de roulement, un flanc dudit pneumatique ou la gomme intérieure dudit pneumatique.

Selon une autre caractéristique de l'invention, la pièce de caoutchouc vulcanisée est constituée par une partie d'un pneumatique pour poids-lourds, pour génie civil ou pour avion.

Selon une autre caractéristique de l'invention, la pièce de caoutchouc crue ou vulcanisée ou prévulcanisée est constitutive d'un emplâtre de réparation de pneumatiques.

L'invention concerne également un emplâtre de réparation pour pneumatiques comprenant au moins une pièce de caoutchouc crue ou prévulcanisée ou vulcanisée et une composition adhésive à base d'au moins un élastomère fortement insaturé choisi dans le groupe constitué par le caoutchouc naturel, le polyisoprène, le polybutadiène, les copolymères styrène-butadiène, styrène-isoprène, butadiène-isoprène et les terpolymères styrène-butadiène-isoprène, un solvant aliphatique et un système de "cuisson" comprenant au moins un composé aryle dinitrile oxyde stable.

L'invention concerne encore un pneumatique comportant au moins une composition à base d'au moins un élastomère fortement insaturé choisi dans le groupe constitué par le caoutchouc naturel, le polyisoprène, le polybutadiène, les copolymères styrène-butadiène, styrène-isoprène, butadiène-isoprène et les terpolymères styrène-butadiène-isoprène, un solvant aliphatique et un système de "cuisson" comprenant au moins un composé aryle dinitrile oxyde stable.

### I- DESCRIPTION DETAILLEE DE L'INVENTION

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

L'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition peut comporter en outre des additifs usuellement utilisés dans des compositions de caoutchoucs pour enveloppes de pneumatiques tels que de l'oxyde de zinc, de l'acide stéarique ou du stéarate de zinc, une ou des résine(s).

### I-2 Composé aryle dinitrile oxyde stable

A titre de composé aryle dinitrile oxyde stable, conviennent particulièrement le mésitylène dinitrile oxyde, MDNO, et le bismésitylène dinitrile oxyde, BMNO.

Leur synthèse est décrite notamment dans la demande de brevet EP 0.903.338A2 et dans les publications qui suivent :
- pour le MDNO :
- Synthesis of stable functionnaly substituted nitrile oxides of the aromatic series, D.V. Tsyganov, A.P. Yakubov, L.I. Belen'kii and M.M. Krayushkin, Russ. Chem. Bull, 1991, 1078-1080,
- pour le BMNO ::
   - Synthesis and properties of stable aromatic bis(nitrile oxides), D.V. Tsyganov, A.P. Yakubov, L.I. Belen'kii and M.M. Krayushkin, Russ. Chem. Bull, 1991, 40, 6, 1238-1243,
   - et Synthesis of sterically hindered dialdehyde, A.P. Yakubov, D.V. Tsyganov, L.I. Belen'kii and M.M. Krayushkin M.M. Krayushkin et coll, Russ. Chem. Bull., 1991, Vol 40, n°7, 1509-1512.

### II- EXEMPLES DE REALISATION DE L'INVENTION

Les exemples de réalisation qui suivent illustrent l'invention sans la limiter.

### II-1 Test d'adhésion

Les compositions adhésives conformes à l'invention sont évaluées par un test d'adhésion

Le test d'adhésion consiste à mesurer la force d'arrachement en traction uniaxiale d'une éprouvette multi-composants assemblée comprenant d'une part la composition adhésive avec le système de "cuisson", la gomme de liaison et deux compositions vulcanisées. L'éprouvette subit un traitement thermique suivant des conditions pré définies afin que la composition adhésive puisse réticuler. En fait on retrouve dans l'éprouvette, deux assemblages qui correspondent tous deux à l'assemblage d'une gomme de rechapage ou de réparation collée grâce à la composition adhésive à une partie de surface d'un pneumatique correspondant respectivement à une partie d'une nappe carcasse NC pour l'un des assemblages et à une partie d'une gomme de revêtement intérieur du pneumatique pour l'autre.

L'éprouvette utilisée dans le test d'adhésion est ainsi un empilage de 5 composants: (i) une pièce de caoutchouc vulcanisée correspondant à un élément de surface d'un pneumatique (nappe de renforcement en textile cuit, côté nappe carcasse NC), (ii) une composition adhésive conforme à l'invention, (iii) une composition constituant la gomme de rechapage ou de réparation sous forme d'une couche crue de faible épaisseur, iv) une composition adhésive conforme à l'invention et v) une pièce de caoutchouc vulcanisée correspondant à un élément de surface d'un pneumatique (côté gomme intérieure GI).

### a) Préparation du matériau (i)

Le matériau (i) est un mélange à base de NR, noir, huile d'extension et autres additifs usuels comportant un système de vulcanisation usuel à base de soufre et d'accélérateurs de vulcanisation. Le matériau (v) est un mélange caoutchouc butyl (copolymère d'isobutylène et d'isoprène), noir de carbone, huile d'extension et autres additifs usuels comportant un système de vulcanisation usuel à base de soufre et d'accélérateurs de vulcanisation. La composition (iii), réalisée sous forme d'une couche de mélange cru très fine, est un mélange NR- noir- huile d'extension dépourvu d'accélérateur(s) selon la formulation ci-dessous :

| | |
|---|---|
| NR | 100 |
| Noir N660 | 50 |
| Acide stéarique | 1 |
| ZnO | 3 |
| Huile PA BV1121 | 20 |
| 6PPD | 1 |
| Soufre soluble | 2 |

Ce dernier mélange représente un emplâtre type de réparation.

### b) Préparation des compositions adhésives (ii) et (iv)

Pour réaliser les éprouvettes pour le test d'adhésion, on réalise au préalable la préparation d'une composition adhésive selon l'invention sous forme d'une dissolution composée d'un volume de solvant , dépourvue de soufre et d'accélérateur(s), d'un élastomère diénique, en l'occurrence de NR plastifié et d'additifs répondant la formulation 1 suivante :

| | pce | g | mL |
|---|---|---|---|
| NR plastifié | 100 | 6.88 | |
| Stéarate de Zn | 2 | 0.138 | |
| Resin-OPFT(1) | 1 | 0.069 | |
| MDNO | 7.5 | 0.516 | |
| PTF(2) | 110.5 | 7.6 | |
| Heptane | | 68.4 | 100 |
| Dissolution totale | | 76.0 | |

| | | | |
|---|---|---|---|
| (1) la résine RESIN-OPFT est une résine formophénolique substituée octyle, et (2) PTF représente le poids total des constituants respectivement en pce et en grammes de la formulation hormis le solvant. | | | |

### c) Préparation de la composition témoin

Une éprouvette témoin est également réalisée avec une composition témoin sous forme d'une dissolution de la gomme de liaison répondant à la formulation 2 suivante :

| | Pce | g | mL |
|---|---|---|---|
| NR plastifié | 100 | 6.97 | |
| Stéarate de Zn | 2 | 0.139 | |
| Resin-OPFT(1) | 1 | 0.070 | |
| ZIPX(3) | 4 | 0.279 | |
| DPG(4) | 2 | 0.139 | |
| | | | |
| PTF (2) | 109 | 7.6 | |
| Heptane | | 68.4 | 100 |
| Dissolution totale | | 76.0 | |

| | | | |
|---|---|---|---|
| (3) ZIPX :isopropyl xanthate de zinc (4) DPG : diphénylguanidine | | | |

Pour réaliser la préparation de la dissolution, on pèse et introduit le caoutchouc naturel (NR) plastifié en petits morceaux dans une bouteille étanche de 500 mL puis on ajoute 70 mL d'heptane. On ferme la bouteille puis on homogénéise en maintenant la bouteille sous agitation pendant une nuit. Le lendemain on pèse et introduit dans un second flacon de 250 mL les divers constituants autre que le NR, au besoin écrasés. On ajoute ensuite 20 mL d'heptane puis on agite le flacon pendant une heure à température ambiante (22°C). La solution obtenue est ensuite passée au bain à ultrasons pendant 5 minutes, puis laissée au repos durant 5 minutes et à nouveau repassée au bain à ultrasons pendant 5 nouvelles minutes. On introduit cette solution à la solution précédente de NR puis l'on rince le flacon de 250 mL avec 10 mL d'heptane qui sont ajoutés au flacon comprenant les constituants. Ce flacon est ensuite agité pendant 10 minutes à température ambiante. La gomme de liaison ainsi préparée sous forme de dissolution est appliquée sur les éprouvettes servant au test d'adhésion selon le protocole décrit ci-dessous, dès la dernière étape d'agitation réalisée.

### d) Préparation des éprouvettes

La préparation des éprouvettes pour réaliser le test d'adhésion est réalisée selon la succession d'étapes suivantes :
1. Couper les éprouvettes en bandelettes (parallèlement aux marques de fils) avec une largeur de 10 mm (soit environ 12 bandelettes). (on éliminera les zones de bordure pour une bonne reproductibilité des mesures) 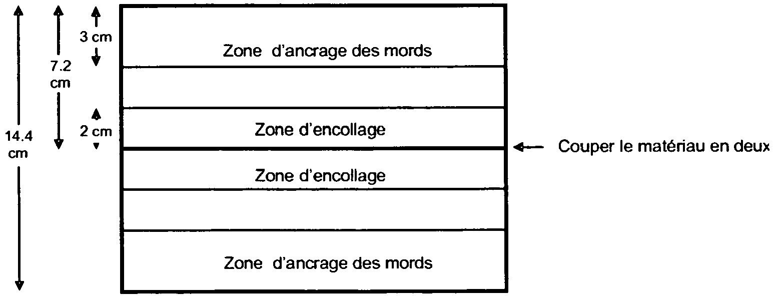
2. Couper des bandes de mélange « couche mélange cru » de 20 * 10 mm de large.
3. Confectionner les éprouvettes selon le mode opératoire suivant (sous hotte) :
   ➢ Prendre une première bandelette et appliquer 0.1 ml de composition adhésive
   ➢ Laisser sécher une dizaine de minutes
   ➢Déposer une bande de mélange cru sur cette zone.
   ➢On réalise la même opération sur l'autre face de la bande de mélange crue avec la composition adhésive et une seconde bandelette
4. Cuire les éprouvettes aux temps et températures désirés (24 heures à température ambiante)

### e) Conditions du test

Les éprouvettes ainsi confectionnées sont utilisées pour la réalisation du test d'adhésion dans les conditions suivantes:
La réalisation du test d'adhésion est effectuée à température ambiante à l'aide d'un appareil INSTRON 5565. L'éprouvette est fixée à ses 2 extrémités sur une zone de 3 cm par des mords. La partie supérieure de l'appareil se déplace de 100mm/min jusqu'à ce que la rupture de l'éprouvette intervienne. La force N est représentée en fonction de l'allongement de l'éprouvette testée. Cette force N qu'on nomme également « force d'arrachement » est liée au rendement de réticulation : une grande force d'arrachement signifie un rendement de réticulation élevé.

Les formulations 1 et 2 sont utilisées pour réaliser 2 éprouvettes testées selon le protocole décrit ci-dessus et les résultats de mesure sont consignés dans le tableau ci-dessous.

| Force d'arrachement (N) | ZIPX/DPG 4/2 pce | MDNO 7,5 pce |
|---|---|---|
| Moyenne | 115,6 | 312,1 |
| Ecart-type | 10,9 | 54,2 |

Les résultats obtenus montrent que la force d'arrachement obtenue avec la gomme de liaison correspondant à la formulation 1 conforme à l'invention est 2,7 fois supérieure à celle obtenue avec la gomme de liaison correspondant à la formulation témoin 2 contenant le système accélérateurs ZIPX/DPG (système connu pour a priori fonctionner à des températures relativement basses telles que 60°C, et là on peut dire qu'arrachement insuffisant), ce qui révèle une activité importante de réticulation du MDNO dans le délai fixé de 24 heures par rapport à une solution mettant en oeuvre des accélérateurs de vulcanisation classique. Le niveau de réticulation atteint le niveau de réticulation requis pour ce type d'application de gomme, à savoir comme gomme de liaison de deux pièces de caoutchouc crues ou prévulcanisées ou vulcanisées pour la fabrication de pneumatiques rechapées pour poids-lourds, notamment à carcasse radiale, ou la fabrication d'emplâtres destinés à la réparation de pneumatiques usagées

## Revendications

1. Utilisation d'une composition adhésive entre une pièce de caoutchouc vulcanisée et une pièce de caoutchouc crue ou prévulcanisée ou vulcanisée , à base d'au moins un élastomère fortement insaturé choisi dans le groupe constitué par le caoutchouc naturel, le polyisoprène, le polybutadiène, les copolymères styrène-butadiène, styrène-isoprène, butadiène-isoprène et les terpolymères styrène-butadiène-isoprène, un solvant aliphatique et un système de "cuisson" comprenant au moins un composé aryle dinitrile oxyde stable.

2. Utilisation selon la revendication 1, **caractérisée en ce que** le composé aryle dinitrile oxyde stable est le mésitylène dinitrile oxyde (MDNO).

3. Utilisation selon la revendication 1, **caractérisée en ce que** le composé aryle dinitrile oxyde stable est le bismésitylène dinitrile oxyde (BMNO)

4. Utilisation selon l'une quelconque des revendications 2 ou 3, **caractérisée en ce que** le taux de composé aryle dinitrile oxyde stable est compris entre 1 à 20 pce, parties en poids pour cent parties d'élastomère,.

5. Utilisation selon la revendication 4, **caractérisée en ce que** le taux de composé aryle dinitrile oxyde stable est compris entre 2 et 15 pce.

6. Utilisation selon la revendication 5, **caractérisée en ce que** le taux de composé aryle dinitrile oxyde stable est compris entre 5 et 10 pce.

7. Utilisation selon l'une quelconque des revendications 1 à 6, **caractérisée en ce que** la température d'utilisation est inférieure à 60°C,

8. Utilisation selon la revendication 7, **caractérisée en ce que** la température d'utilisation est comprise entre 18°C et 45°C

9. Utilisation selon l'une des revendications 1 à 8, **caractérisée en ce que** la pièce de caoutchouc vulcanisée est constituée par une partie d'un pneumatique.

10. Emplâtre de réparation pour pneumatiques comprenant au moins une pièce de caoutchouc crue ou prévulcanisée ou vulcanisée et une composition adhésive à base d'au moins un élastomère fortement insaturé choisi dans le groupe constitué par le caoutchouc naturel, le polyisoprène, le polybutadiéne, les copolymères styrène-butadiène, styrène-isoprène, butadiène-isoprène et les terpolymères styrène-butadiène-isoprène, un solvant aliphatique et un système de "cuisson" comprenant au moins un composé aryle dinitrile oxyde stable.

11. Emplâtre de réparation pour pneumatiques selon la revendication 10, **caractérisé en ce que** le composé aryle dinitrile oxyde stable est le mésitylène dinitrile oxyde (MDNO).

12. Emplâtre de réparation pour pneumatiques selon la revendication 10, **caractérisé en ce que** le composé aryle dinitrile oxyde stable est le BMNO.

13. Pneumatique comportant au moins une composition à base d'au moins un élastomère fortement insaturé choisi dans le groupe constitué par le caoutchouc naturel, le polyisoprène, le polybutadiéne, les copolymères styrène-butadiène, styrène-isoprène, butadiène-isoprène et les terpolymères styrène-butadiène-isoprène, un solvant aliphatique et un système de "cuisson" comprenant au moins un composé aryle dinitrile oxyde stable.

14. Pneumatique selon la revendication 13, **caractérisé en ce que** le composé aryle dinitrile oxyde stable est le mésitylène dinitrile oxyde (MDNO).

15. Pneumatique selon la revendication 13, **caractérisé en ce que** le composé aryle dinitrile oxyde stable est le BMNO.

## Patentansprüche

1. Verwendung einer Klebstoffzusammensetzung zwischen einem Teil aus vulkanisiertem Kautschuk und einem Teil aus rohem oder vorvulkanisiertem oder vulkanisiertem Kautschuk auf der Basis mindestens eines hochungesättigten Elastomers aus der Gruppe bestehend aus Naturkautschuk, Polyisopren, Polybutadien, Styrol-Butadien-, Styrol-Butadien- und Butadien-Isopren-Copolymeren und Styrol-Butadien-Isopren-Terpolymeren, eines aliphatischen Lösungsmittels und eines Härtungssystems, das mindestens eine stabile Aryldinitriloxidverbindung umfasst.

2. Verwendung nach Anspruch 1, **dadurch gekennzeichnet, dass** es sich bei der Aryldinitriloxidverbindung um Mesitylendinitriloxid (MDNO) handelt.

3. Verwendung nach Anspruch 1, **dadurch gekennzeichnet, dass** es sich bei der Aryldinitriloxidverbindung um Bismesitylendinitriloxid (BMNO) handelt.

4. Verwendung nach einem der Ansprüche 2 oder 3, **dadurch gekennzeichnet, dass** der Gehalt an stabiler Aryldinitriloxidverbindung zwischen 1 und 20 phe, Gewichtsteile pro hundert Teile Elastomer, liegt.

5. Verwendung nach Anspruch 4, **dadurch gekennzeichnet, dass** der Gehalt an stabiler Aryldinitriloxidverbindung zwischen 2 und 15 phe liegt.

6. Verwendung nach Anspruch 5, **dadurch gekennzeichnet, dass** der Gehalt an stabiler Aryldinitriloxidverbindung zwischen 5 und 10 phe liegt.

7. Verwendung nach einem der Ansprüche 1 bis 6, **dadurch gekennzeichnet, dass** die Verwendungstemperatur unter 60°C liegt.

8. Verwendung nach Anspruch 7, **dadurch gekennzeichnet, dass** die Verwendungstemperatur zwischen 18°C und 45°C liegt.

9. Verwendung nach einem der Ansprüche 1 bis 8, **dadurch gekennzeichnet, dass** das Teil aus vulkanisiertem Kautschuk durch einen Teil eines Luftreifens gebildet wird.

10. Luftreifenreparaturpflaster, umfassend mindestens ein Teil aus rohem oder vorvulkanisiertem oder vulkanisiertem Kautschuk und eine Klebstoffzusammensetung auf der Basis mindestens eines hochungesättigten Elastomers aus der Gruppe bestehend aus Naturkautschuk, Polyisopren, Polybutadien, Styrol-Butadien-, Styrol-Isopren- und Butadien-Isopren-Copolymeren und Styrol-Butadien-Isopren-Terpolymeren, eines aliphatischen Lösungsmittels und eines Härtungssystems, das mindestens eine stabile Aryldinitriloxidverbindung umfasst.

11. Luftreifenreparaturpflaster nach Anspruch 10, **dadurch gekennzeichnet, dass** es sich bei der stabilen Aryldinitriloxidverbindung um Mesitylendinitriloxid (MDNO) handelt.

12. Luftreifenreparaturpflaster nach Anspruch 10, **dadurch gekennzeichnet, dass** es sich bei der stabilen Aryldinitriloxidverbindung um BMNO handelt.

13. Luftreifen, umfassend mindestens eine Zusammensetzung auf der Basis mindestens eines hochungesättigten Elastomers aus der Gruppe bestehend aus Naturkautschuk, Polyisopren, Polybutadien, Styrol-Butadien-, Styrol-Butadien- und Butadien-Isopren-Copolymeren und Styrol-Butadien-Isopren-Terpolymeren, eines aliphatischen Lösungsmittels und eines Härtungssystems, das mindestens eine stabile Aryldinitriloxidverbindung umfasst.

14. Luftreifen nach Anspruch 13, **dadurch gekennzeichnet, dass** es sich bei der stabilen Aryldinitriloxidverbindung um Mesitylendinitriloxid (MDNO) handelt.

15. Luftreifen nach Anspruch 13, **dadurch gekennzeichnet, dass** es sich bei der stabilen Aryldinitriloxidverbindung um BMNO handelt.

## Claims

1. Use of an adhesive composition between a vulcanized rubber part and an uncured or prevulcanized or vulcanized rubber part, based on at least one highly unsaturated elastomer chosen from the group formed by natural rubber, polyisoprene, polybutadiene, styrene-butadiene, styrene-isoprene and butadiene-isoprene copolymers and styrene-butadiene-isoprene terpolymers, an aliphatic solvent and a "curing" system comprising at least one stable aryl dinitrile oxide compound.

2. Use according to Claim 1, **characterized in that** the stable aryl dinitrile oxide compound is mesitylene dinitrile oxide (MDNO).

3. Use according to Claim 1, **characterized in that** the stable aryl dinitrile oxide compound is bismesitylene dinitrile oxide (BMNO).

4. Use according to either one of Claims 2 and 3, **characterized in that** the content of stable aryl dinitrile oxide compound is between 1 and 20 phr, parts by weight per hundred parts of elastomer.

5. Use according to Claim 4, **characterized in that** the content of stable aryl dinitrile oxide compound is between 2 and 15 phr.

6. Use according to Claim 5, **characterized in that** the content of stable aryl dinitrile oxide compound is between 5 and 10 phr.

7. Use according to any one of Claims 1 to 6, **characterized in that** the operating temperature is below 60°C.

8. Use according to Claim 7, **characterized in that** the operating temperature is between 18°C and 45°C.

9. Use according to one of Claims 1 to 8, **characterized in that** the vulcanized rubber part is constituted by a portion of a tyre.

10. Tyre repair patch comprising at least one uncured or prevulcanized or vulcanized rubber part and an adhesive composition based on at least one highly unsaturated elastomer chosen from the group formed by natural rubber, polyisoprene, polybutadiene, styrene-butadiene, styrene-isoprene and butadiene-isoprene copolymers and styrene-butadiene-isoprene terpolymers, an aliphatic solvent and a "curing" system comprising at least one stable aryl dinitrile oxide compound.

11. Tyre repair patch according to Claim 10, **characterized in that** the stable aryl dinitrile oxide compound is mesitylene dinitrile oxide (MDNO).

12. Tyre repair patch according to Claim 10, **characterized in that** the stable aryl dinitrile oxide compound is BMNO.

13. Tyre comprising at least one composition based on at least one highly unsaturated elastomer chosen from the group formed by natural rubber, polyisoprene, polybutadiene, styrene-butadiene, styrene-isoprene and butadiene-isoprene copolymers and styrene-butadiene-isoprene terpolymers, an aliphatic solvent and a "curing" system comprising at least one stable aryl dinitrile oxide compound.

14. Tyre according to Claim 13, **characterized in that** the stable aryl dinitrile oxide compound is mesitylene dinitrile oxide (MDNO).

15. Tyre according to Claim 13, **characterized in that** the stable aryl dinitrile oxide compound is BMNO.
